# EUROPEAN PATENT APPLICATION

(11) **EP 4 804 159 A1**
(43) Date of publication of application: **09.09.2026**
(21) Application number: 25161429.3
(22) Date of filing: 03.03.2025
(51) Int. Cl.: G08G 1/00

(54) **TRAFFIC FLOW FORECASTING FROM MULTIVARIATE TIME SERIES**

(71) Applicant: FUJITSU LIMITED, Kawasaki-shi, Kanagawa 211-8588 (JP)
(72) Inventor: MAKARIOU, Savvas, Slough, SL1 2BE (GB)
(74) Representative: Haseltine Lake Kempner LLP

(57) **Abstract**

A computer implemented method for forecasting traffic flow using a pretrained recursive model, comprising, inputting multivariate data at a forecast time-point into the pretrained recursive model, and predicting, using the pretrained recursive model, a traffic flow at the forecast time-point, wherein the pretrained recursive model is trained using a multivariate dataset comprising a time-series traffic flow variable and an additional time-series variable at times before the forecast time-point, and wherein the multivariate data at the forecast time-point input into the pretrained recursive model comprises the additional time-series variable at the forecast time-point.

## Description

### Technical field

The present invention relates to a method for forecasting traffic flow and in particular to a method for forecasting traffic flow using a recursive forecasting model. The present invention further relates to a method for training a recursive model for forecasting.

### Background

Traffic flow forecasting may be considered a critical component of intelligent transportation systems (ITS). Forecasting may be used in both managing and planning of transportation systems. Forecasting can involve predicting the number of vehicles or people that will pass through a specific point or segment of a road or network within a given period. The ability to accurately forecast traffic flow has numerous benefits, including improved traffic management, enhanced road safety, and more efficient urban planning. These benefits may all contribute to helping reduce CO2 emissions from transportation which is an important task in this time and age.

Several technologies are currently used for traffic flow forecasting. Traditional methods include statistical models such as autoregressive integrated moving average (ARIMA) models and exponential smoothing models. These models are relatively simple and easy to implement, but they may not capture complex traffic patterns effectively.

Despite the advancements in traffic flow forecasting technologies, there are still challenges to be addressed. One major challenge is the inherent uncertainty and time dependency in traffic data. Another challenge is the lack of high-quality, real-time traffic data, which may be essential for training and validating forecasting models.

It is therefore desirable to improve traffic flow forecasting.

### Summary

The present invention is defined in the independent claims, to which reference should now be made. Advantageous features are set out in the sub claims.

According to an aspect of the present invention there is provided a computer implemented method for forecasting traffic flow using a pretrained recursive model. The method may comprise the following steps: inputting multivariate data at a forecast time-point into the pretrained recursive model; and predicting, using the pretrained recursive model, a traffic flow at the forecast time-point. The pretrained recursive model may be trained using a multivariate dataset comprising a time-series traffic flow variable and an additional time-series variable at times before the forecast time-point. The multivariate data at the forecast time-point input into the pretrained recursive model may comprise the additional time-series variable at the forecast time-point.

According to another aspect of the present invention there is provided a computer implemented method for training a recursive model to forecast traffic flow. The method may comprise the following steps: inputting a multivariate training dataset, comprising a time-series traffic flow variable and an additional time-series variable, into the recursive model; predicting, using the recursive model, a traffic flow at a next time-point of the time-series traffic flow variable, wherein the recursive model comprises preset hyperparameters; and adjusting the preset hyperparameters to train the recursive model based on the difference between the predicted traffic flow and a true traffic flow at the next time-point.

### Brief description of drawings

Reference is made, by way of example only, to the accompanying drawings in which:
**Figure 1** shows an example forecast using a known forecasting model;
**Figure 2A** shows steps of a method disclosed herein for forecasting traffic flow using a pretrained recursive model;
**Figure 2B** shows steps of a method disclosed herein for training a recursive model to forecast traffic flow;
**Figure 3** shows an exemplary method disclosed herein for training a recursive model for predicting traffic flow.
**Figure 4** shows an example of 1-step recursive forecasting which may be implemented in the forecasting method described herein;
**Figure 5** shows an exemplary recursive model which may be used in the method for forecasting described herein;
**Figure 6** is a block diagram of an information apparatus, or computer device which may be used with the method described herein.

### Detailed description

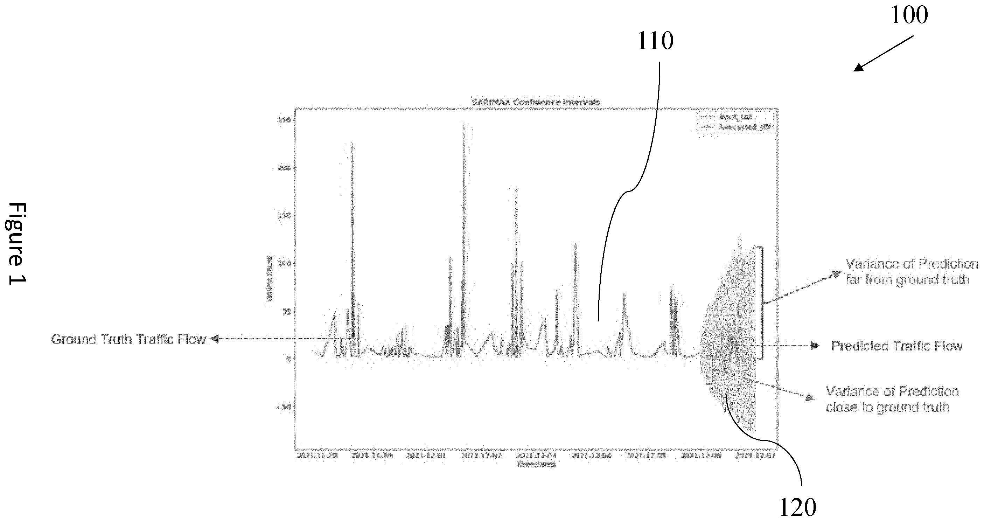

The following definitions may be helpful for understanding the description provided herein. The definitions include reference to terms which should not be considered in any way limiting. Reference to:
1. Time-Series Forecasting includes reference to a technique used to predict future values based on previously observed values. In this context, it is used to predict traffic flow based on past data.
2. Traffic Flow includes reference to the number of vehicles/people/airplanes/ferries passing a point during a specified period. It is a factor which may be used in traffic management and planning. It may be a count of a traffic variable at a point in time and may have a wide definition of traffic representation.
3. Ensemble Techniques includes reference to methods that combine predictions from multiple machine learning models and/or algorithms to improve accuracy. They are often used when a single model struggles to capture the complexity of the data.
4. Exogenous Factors includes reference to external factors that can influence a prediction. In this context, the inventors identified exogenous factors such as weather, road conditions and events.
5. Multivariate Dataset includes reference to a dataset that includes multiple variables. In this case, the variables could include traffic flow, weather, road conditions, and events.
6. Recursive 1-Step Forecasting Model includes reference to a prediction model that uses the prediction from a previous step as input for the next prediction. The inventors identified that this method may help reduce the variance of forecasting.
7. Temporal Correlation includes reference to the statistical relationship between observations at different points in time. It is a factor which may be used in time-series forecasting.
8. Time Periodicity includes reference to patterns in the data that repeat over specific periods. In traffic flow data, this could include daily or weekly patterns.
9. Weather Disturbance includes reference to the impact of weather conditions on traffic flow. Adverse weather can cause disruptions to traffic, making it a factor which may be considered in traffic flow prediction.
10. Variance of Forecasting includes reference to the variability of the forecasted values. A lower variance indicates more reliable predictions. As shown in Figure 1, in known forecasting methods the variability tends to increase the further away the prediction is from the observed values.
11. Decomposition includes reference to the process of breaking down a time series dataset into its constituent parts, such as trend, seasonality, and residual components. It is often used in time-series analysis to understand the underlying patterns in the data.

**Figure 1** shows an example forecast 100 using a known forecasting model, which the inventor adapted for forecasting traffic flow. The graph is an example time series graph which shows a plot of time (denoted as Timestamp on the x-axis) against Traffic flow (denoted in this example are vehicle count on the y-axis). The graph includes an "input tail" 110 showing the data used to train the forecasting model and a predicted forecast 120, denoted as "forecast_stlr".

The graph demonstrates potential issues with known methods. In particular, the graph shows that variance (i.e. the difference between a ground truth traffic flow and a predicted traffic flow) grows considerably as the forecast moves further away from the ground truth. That is, as the forecast predicts time points further away from the training data (the input data), the variance grows significantly.

This example forecast used SARIMAX (Seasonal Autoregressive Integrated Moving Average + exogenous variables), a known method for forecasting. The SARIMAX model uses autoregression to perform a linear regression on past values of a time series to predict a current value, a moving average to perform linear regression on past error values to predict the current value, and integration to ensure the time series data is stationary. The SARIMAX model also considers season variables and exogenous factors in the training phase.

Machine learning techniques, such as support vector machines (SVM) and artificial neural networks (ANN), have also been applied to traffic flow forecasting. These methods can model complex non-linear relationships and adapt to changing traffic patterns, making them more accurate than traditional statistical models. However, the inventor found that they require large amounts of data and can be computationally intensive.

In recent years, deep learning methods, such as recurrent neural networks (RNN) and long short-term memory (LSTM) networks, have emerged as promising tools for forecasting. These methods may be used to model temporal dependencies in traffic data, which allows for accurate forecasting. However, the inventor found that they also require large datasets and substantial computational resources.

The inventor identified that the current state-of-the-art in time-series forecasting for traffic flow faces several challenges and inefficiencies such as:
1. Limited Complexity: Traditional time-series models and single machine learning models often struggle to capture the complex and nonlinear relationships inherent in traffic flow data. These models are typically designed to handle univariate data and may not perform well when multiple variables are involved.
2. Exclusion of Exogenous Factors: Current models fail to incorporate exogenous factors such as weather and road conditions into their predictions. The inventor identified that these factors may significantly impact traffic flow, and their exclusion can lead to inaccurate forecasts.
3. Overly Complex Ensemble Techniques: While ensemble techniques that combine multiple base models can improve prediction accuracy, they also increase the complexity of the model. This increased complexity can make the model difficult to implement and interpret, and it can also increase the computational resources required. Ensemble techniques in this instance may include combining multiple models and algorithms for forecasting.
4. Lack of Flexibility: Many existing models are not flexible enough to accommodate new data sources or additional factors. This lack of flexibility can limit the model's predictive power and its ability to adapt to changing conditions.
5. High Variance in Long-Term Forecasts: Current models often struggle with high variance in their forecasts, particularly for predictions further in the future. This high variance can reduce the reliability of the forecasts and make them less useful for traffic management and planning.

The inventor identified that improvements in these areas may significantly enhance the accuracy and reliability of traffic flow forecasts. Existing models, including time series and single machine learning models, often struggle to capture the complex and nonlinear relationships inherent in traffic flow data. The inventor has found that the technical challenge lies in the fact that ensemble techniques, which combine several models to improve accuracy, find it difficult to incorporate exogenous factors such as weather and road conditions into the prediction pipeline. The decomposition of traffic flow data has become increasingly complex, and the addition of these factors often necessitates further data pre-processing and decomposition, making the process overly complicated. By developing a model that can handle multivariate data, incorporate exogenous factors, reduce complexity, increase flexibility, and decrease forecasting variance, the inventor has provided a more effective solution for traffic flow prediction to overcome the above limitations of the current technology.

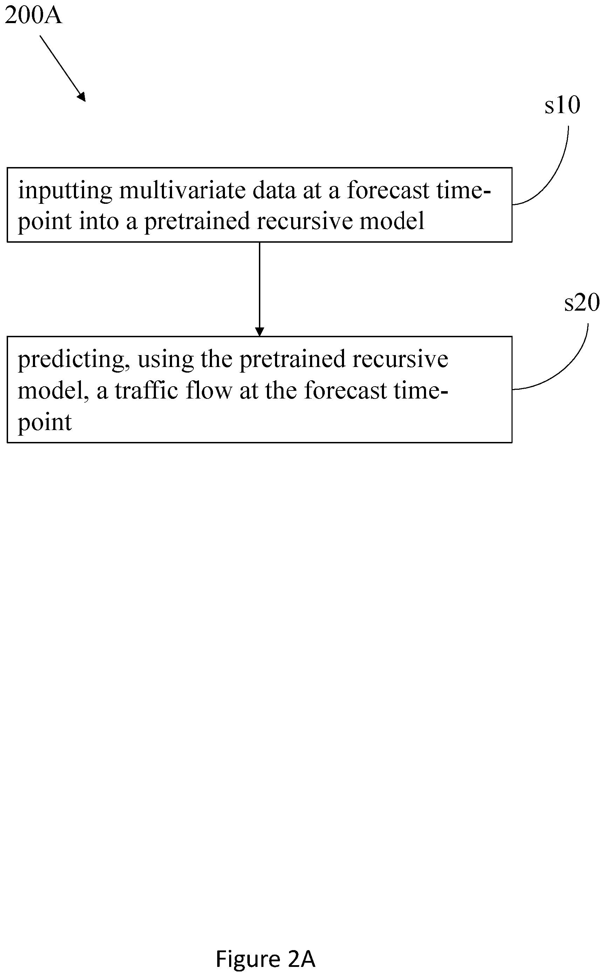

**Figure 2A** shows steps of a computer-implemented method 200A for forecasting traffic flow using a pretrained recursive model.

In an inputting step s10, multivariate data at a forecast time-point may be input into a pretrained recursive model.

In a predicting step s20, using the pretrained recursive model, a traffic flow at the forecast time-point may be predicted. The pretrained recursive model may be trained using a multivariate dataset comprising a time-series traffic flow variable and an additional time-series variable at times before the forecast time-point. The multivariate data at the forecast time-point input into the pretrained recursive model may comprise the additional time-series variable at the forecast time-point.

The additional time-series variable may comprise at least one of (or all of, where available): a weather variable, a road condition variable and an event variable. The additional time-series variable may preferably comprise the event variable and at least one of the weather variable and road condition variable. The additional time-series variable may comprise at least one variable other than traffic flow data. That is, the traffic flow variable may not be comprised in the additional time-series variable. Hence the additional time-series variable may be an exogenous variable.

That is, the time-series variable may comprise at least one variable other than the traffic flow data, but which is likely to have an effect on the traffic flow data.

The event variable may comprise a natural and/or social event such as a sports match, concert or solar eclipse. In an exemplary example, the time-series data may comprise the event variable. The event may be occurring during the forecast time-point. The event variable may include a ranking event number based on the capacity (e.g., the capacity of a venue hosting the event) and/or expected number of people attending the event. For instance, the ranking event number may be between 1 and 10.

In an exemplary example, the additional time-series variable comprises the weather variable, the road condition variable, and the event variable. The number of variables input into the model, which may be denoted by y, may effectively be unlimited in dimension and expandable according to the availability of input datasets. For instance, y could represent a combination of traffic flow, weather, road conditions and events but also has the ability for a further variable to be integrated.

Traffic flow may comprise at least one of: Traffic Volume: Absolute number of vehicles or vehicle density; Traffic Speed: Average speed of vehicles in a specific area; and Travel Time: Expected travel time between two points. The traffic flow may equally apply to people rather than vehicles, or both, and other modes of transport such as bicycles and boats. Traffic flow data may be collected from, for example, GPS data collected from mobile phone (both for people and vehicles). Traffic flow data for people may include footfall data. Further traffic flow data may include density of people, where they are going, and how fast they were able to move throughout the day.

The recursive model may be a 1-step recursive forecasting model. The times before the forecast time-point may be measured over consistently spaced intervals of time.

The forecast time-point may be a next interval of time in the consistently spaced intervals of time.

The recursive model may be trained using the time-series traffic flow data up to forecast time-point. That is, the recursive model may be trained using data up to, but not including, the forecast time-point. The forecast time-point may be one interval of time (e.g., one minute, one hour, one day) after the designated time point.

Any suitable recursive model may be used with the method steps defined herein. For example, the recursive model may be a random forest model, a SARIMAX model with exogenous variables or Gradient Boosting Machines. The random forest model may be a random forest regression model. The random forest model may comprise any suitable number of trees, for example, 200 trees.

The method may further comprise the steps of: further training the pretrained recursive model using the predicted traffic flow at the forecast time-point and the multivariate data at the forecast time-point; and predicting a next traffic flow at a next forecast time-point using the further trained recursive model.

For example, the predicted traffic flow and the multivariate data may be appended to the multivariate dataset, effectively becoming a lagged variable for the next prediction step.

In an example where the recursive model is the random forest model, the predicted traffic flow may be appended to a leaf (or terminating) node of at least one tree of the random forest. That is, the predicted traffic flow may be included in an average of traffic flows at the leaf node.

The steps of inputting multivariate data and appending a predicted traffic flow may be repeated in a recursive manner. That is, the model's predictions may become part of the multivariate training dataset for future predictions.

The method may further comprise notifying a user of the predicted traffic flow. For instance, a user may be notified via at least one of a text message, phone call and application notification. The user may be notified of the predicted traffic flow and may receive, for example, a suggested route. For instance, the suggested route may be a route to an event and may avoid an area with a high predicted traffic flow. If for instance, the user is using a navigation application, the application may automatically re-route the user based on the predicted traffic flow. Thus, by use of notifications and/or potentially re-routing, the method may provide real-time application for a user.

Based on the predicted traffic flow the method described herein may further comprises at least one of: dynamically adjusting traffic light timings, generating alerts about future traffic congestion based on the predicted traffic flow exceeding a predefined threshold, and providing users with alternative routes or suggesting delaying their journeys.

Adjusting traffic light timings may be controlled by Dynamic Traffic Control Systems: The predicted traffic flow data may be used to dynamically adjust traffic light timings. This may be achieved through integration with existing traffic management systems (through for example) and collaboration with city's councils. This may optimize traffic flow and minimize congestion.

Alerts about future traffic congestion may be comprised in an Early Warning Systems for Overcrowding: The method may generate alerts or warnings about impending traffic congestion based on predicted traffic flow exceeding a predefined threshold. These warnings may be disseminated through various channels, such as variable message signs (VMS) on highways, traffic information websites, and navigation applications. The warnings may specify the affected areas and the expected duration of the congestion.

Providing users with alternative routes or suggesting delaying their journeys may be comprised within an Incident Management Framework: By integrating real-time incident reports (e.g., accidents, road closures) into the multivariate dataset, the system may accurately predict the impact of these incidents on traffic flow and provide users with alternative routes or suggest delaying their journeys.

The above steps may contribute to minimizing congestion and may therefore reduce CO2 emissions. For instance, the number of stationary cars in traffic may be reduced, thereby reducing CO2 emissions.

The methods described herein may introduce an event variable/parameter (i.e., an event exogenous feature) in traffic flow forecasting. The event variable may indicate the expected number of people visiting a location at specific times which may then assist in training the recursive model to understand the direct impact on traffic flow. Furthermore, in an example the method provides a recursive method to train the recursive model by only predicting ahead one step at a time and including the predicted step for the next prediction. The inventor found that the method described herein may decreases the variance for predictions multiple time-points ahead by using 1-step recursive predictions.

Furthermore, the inventors found that while conventional forecasting methods which use deep learning (see Figure 1) may provide significant results, they are often very computationally expensive (as also mentioned in the use of LLMs etc). The methods described herein may avoid the use of graphics processing units, GPUs, for training, thereby significantly reducing the required computational resources.

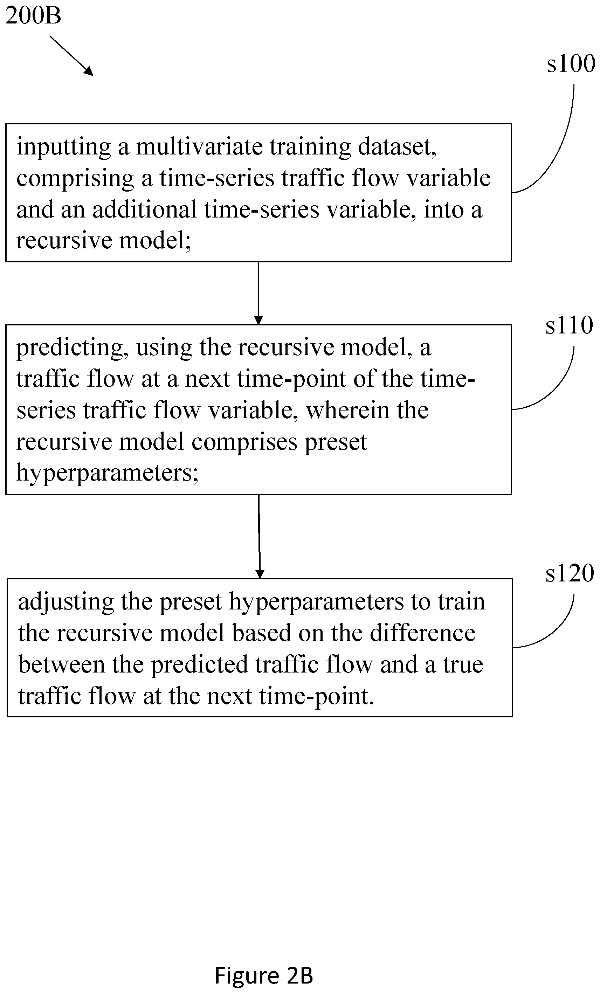

**Figure 2B** shows steps of a computer-implemented method 200B for training a recursive model to forecast traffic flow. The recursive model, once trained, may be the pretrained recursive model as described in relation to Figure 2A.

In an inputting step s100, a multivariate training dataset, comprising a time-series traffic flow variable and an additional time-series variable, may be input into the recursive model.

In a predicting step, s110, using the recursive model, a traffic flow at a next time-point of the time-series traffic flow variable may be predicted. The recursive model may comprise preset hyperparameters. That is, the hyperparameters may be set before training the recursive model.

In an adjusting step, s120, the preset hyperparameters may be adjusted to train the recursive model based on the difference between the predicted traffic flow and a true traffic flow at the next time-point.

The additional time-series variable may comprise at least one of: a weather variable, a road surface variable, and natural and/or social event variable. In an exemplary embodiment, the additional time-series variable may comprise each of the weather variable, the road surface variable, and the event variable.

During training of the pretrained recursive model, a loss between the predicted traffic flow at the forecast time-point and a true traffic flow at the forecast time-point may be determined. The difference between the predicted traffic flow and true traffic flow at the next time point may be based on the loss between the predicted traffic flow and the true traffic flow at the next time-point. The difference may be the loss between predicted and true traffic flow. The true traffic flow may be a measured traffic flow. That is, the true traffic flow may be a measured, or recorded, traffic flow at an instance in time, in this case at the time of the predicted traffic flow.

The loss between the predicted and true traffic flow may be determined using at least one of: a Mean Square Error (MSE), Mean Absolute Error (MAE), and Huber loss (e.g., using a loss function). The pretrained recursive model may be optimized using a grid search of hyperparameter of the pretrained recursive model. The grid search may be a grid search with cross validation. In an example, an optimized recursive model may be a recursive model which returns the lowest loss from the grid search of hyperparameters.

A multivariate dataset may comprise the multivariate training dataset and a multivariate testing dataset, the recursive model may be trained using the multivariate training dataset and the multivariate testing dataset may comprise the true traffic flow at the next time-point.

In an optional initializing step (not shown), before inputting the multivariate training dataset into the recursive model, the multivariate dataset may be initialized. The multivariate dataset may be initialized by splitting the dataset into the training set and the testing set. The split may be an 80%/20% split where 80% of the data is used for training and 20% is used for testing.

Following the initialization/creation of the multivariate dataset, the method may proceed with a time-series forecasting of the traffic flow using a recursive 1-step forecasting recursive model. As described above, in this model, the 1-step prediction of traffic flow may be combined with the previous multivariate training dataset and considered for the next 1-step prediction. This recursive approach may help decrease the variance of forecasting introduced when looking ahead in the future. The multivariate nature of the model may allow for increased complexity, thereby improving the accuracy and reliability of the traffic flow predictions.

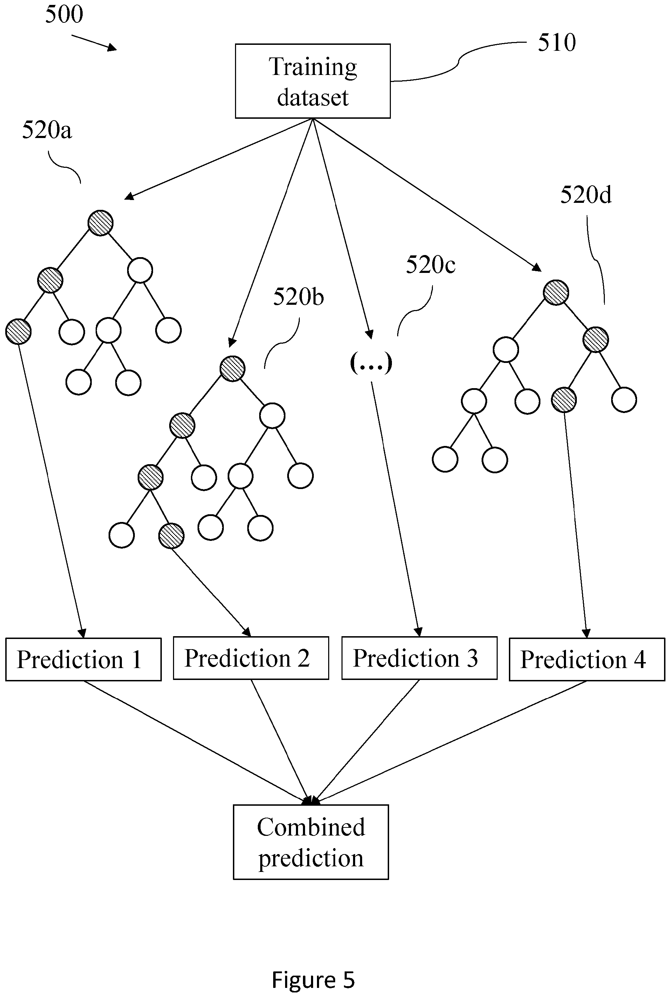

The recursive model may be a random forest model. The trees in the random forest model may be trained using subsets of the multivariate training dataset which are selected using bootstrap aggregation. More detail of an exemplary example with the random forest are provided in relation to Figure 5 below.

The inventor identified that the methods described herein, in for example Figures 2A and/or 2B and/or the exemplary method described in relation to Figure 5, may offer the following benefits over existing traffic flow prediction models.
1. Enhanced Accuracy and Robustness: The ability of the recursive model to consider temporal correlation and time periodicity of the time series multivariate dataset (which may include weather disturbance and if an event is happening) in its predictions may result in a final traffic flow forecast that is both more accurate and robust. By incorporating these factors, the model may better capture the complex and nonlinear relationships in traffic flow data, thereby improving the reliability of its predictions. Accuracy may be improved by the introduction of recursive 1-step forecasting.
2. Flexibility: The model may be designed to be adjustable, allowing for the inclusion of additional factors as and when they become available. This flexibility may make the model adaptable to a wide range of scenarios and capable of accommodating new data sources, thereby enhancing its predictive power. For instance, if a new exogenous variable becomes available, that variable may be introduced to retrain the recursive model.
3. Comprehensive Analysis: The multivariate nature of the model may allow for a more comprehensive analysis of traffic flow. By considering multiple factors simultaneously, the model may provide a more holistic view of traffic conditions, which may be valuable for traffic management and planning.
4. Improved Forecasting: The use of a recursive 1-step forecasting model may reduce the variance of forecasting, particularly for predictions further in the future. This improvement may lead to more effective traffic management strategies and potentially reduce congestion and improve road safety.

In summary, the methods described herein may provide a more accurate, robust, flexible, and comprehensive solution for traffic flow prediction. The methods described herein may incorporate multiple (exogenous) factors (especially events) into a multivariate dataset for traffic flow prediction. The method may adjust to include new data, and reduce forecasting variance and increase prediction complexity, thereby providing a significant advancement in the field of traffic flow forecasting.

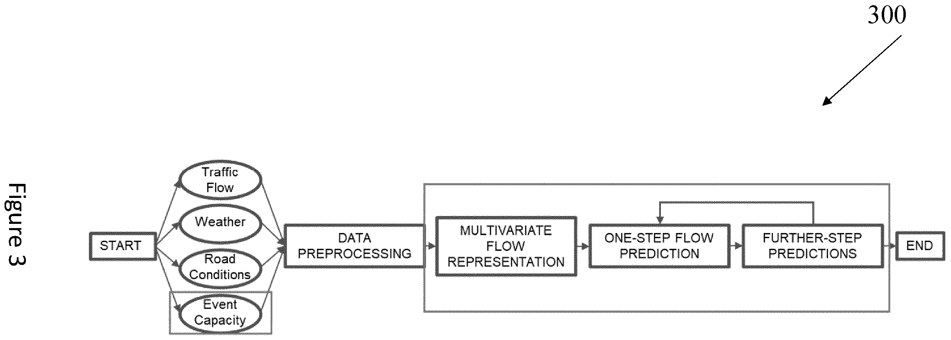

**Figure 3** shows an exemplary method 300 for training a recursive model for predicting traffic flow. In an initialization step, a multivariate dataset may be initialized/loaded. The multivariate dataset may include a traffic flow variable and additional time-series variables. A traffic flow variable may be at least one of: Traffic Volume: Absolute number of vehicles or vehicle density; Traffic Speed: Average speed of vehicles in a specific area; Travel Time: Expected travel time between two points. The Traffic volume may refer to the number of vehicles/people/airplanes/ferries passing a point during a specified period. Traffic flow may be a critical factor in traffic management and planning. Traffic flow may refer to a count of a traffic variable at a point in time and may have a wide definition of traffic representation.

Along with the traffic flow variable, the multivariate dataset may include additional time-series variables. The inventor identified that in an exemplary method, the multivariate dataset may include the additional variables: weather, road conditions and events. However, the method developed by the inventor allows for the input, which may be denoted as y, to be unlimited in dimension and expandable according to the availability of input datasets. For instance, y could represent a combination of traffic flow, weather, road conditions and events but also incorporate any other variables depending on their availability. This flexibility may allow the recursive model to incorporate a wider range of factors that can influence traffic flow, thereby improving the accuracy of its predictions.

The inventor found that an event capacity variable had a particular importance on the prediction accuracy of the recursive model. In an exemplary example, the multivariate dataset may include the traffic flow variable, the events variable and optionally one or more additional variables.

In an implementation phase, the variables in the multivariate dataset which are input into the recursive model may be the same variables used to train the recursive model (except for the traffic flow variable which is to be predicted by the recursive model).

The multivariate dataset may be pre-processed in a Data Preprocessing step. The multivariate dataset may be pre-processed by identifying and handling any inconsistencies or errors in the data, such as duplicate entries or incorrect timestamps. Also, the timestamps using the datetime format may be matched for all the supplementary datasets.

Furthermore, in the data preprocessing step, any missing data may be handled by using, for example, backward fill by propagating the last observed value backward to fill in missing values. Of course, other suitable data imputation methods may be used for missing data.

In a Multivariate Flow Representation step, the multivariate dataset may be transformed into a suitable format for the recursive model. For instance, the recursive model may not explicitly accept a time variable (such as hours, days, etc.).

The multivariate data may therefore be converted into a representation which is accepted by the recursive model. A method for reformatting the time-series dataset may be a sliding window method. For instance, the time series dataset may be reconstructed by using the value at the previous time step to predict the value at the next time-step. That is, the previous time steps may be used as input variables and the next time step may be used as the output variable. The time column may then be dropped. The time-series multivariate dataset may therefore be reformulated as a supervised learning problem.

In an example, the recursive model may be a random forest model. In general, random forest models may not handle temporal dependencies in time series datasets well. To improve this potential deficiency, the inventors used the sliding window method, for example as described above. Applying a standard random forest to time series data may not generate expected results. However, the inventors found that first transforming the data to incorporate the temporal information into features that the random forest can understand may improve accuracy. While this example refers to a random forest, the sliding window approach may be applied to any suitable recursive model and the method steps described herein may be used with any suitable recursive model.

The inventor found that methods using, for example, SARIMAX models (see Figure 1) struggle to convert some exogenous variables as training data variables. In particular, the SARIMAX model did not perform well with event capacity data. Thus, while it may be possible to add exogenous variables with SARIMAX, the inventors found that during testing the SARIMAX model performed poorly, especially when event capacity was included as a variable. In contrast, the performance gain with the method and variables described herein was significantly improved.

Furthermore, the multivariate data may be split into a training and testing set. For instance, the training set may comprise the first 80% of the dataset and the testing set may comprise the last 20% of the dataset.

Following the data preprocessing and formatting steps, the training method may proceed with an initial time-series forecasting of traffic flow using a recursive 1-step forecasting model. Initial hyperparameters may be set for the recursive model. The training set of the multivariate dataset may be used to initially train the recursive model. In an exemplary example the recursive model is a random forest model. More details of the exemplary example are provided in relation to Figure 5 below. The recursive model may be trained to predict a traffic flow at a next time point. For instance, the next time-point may be a first time-point in the test set. The recursive model may predict the traffic flow for the next-time point using the training set and using multivariate data at the next-time point, but excluding the (true, i.e. the recorded) traffic flow variable at the next-time point.

In general, the training process may involve adjusting the parameters of a forecasting function, f, of the model to minimize the difference between the predicted traffic flow and the actual (true) traffic flow, as described below. This process may allow the model to learn the complex relationships between traffic flow and the additional variables, thereby improving its predictive power.

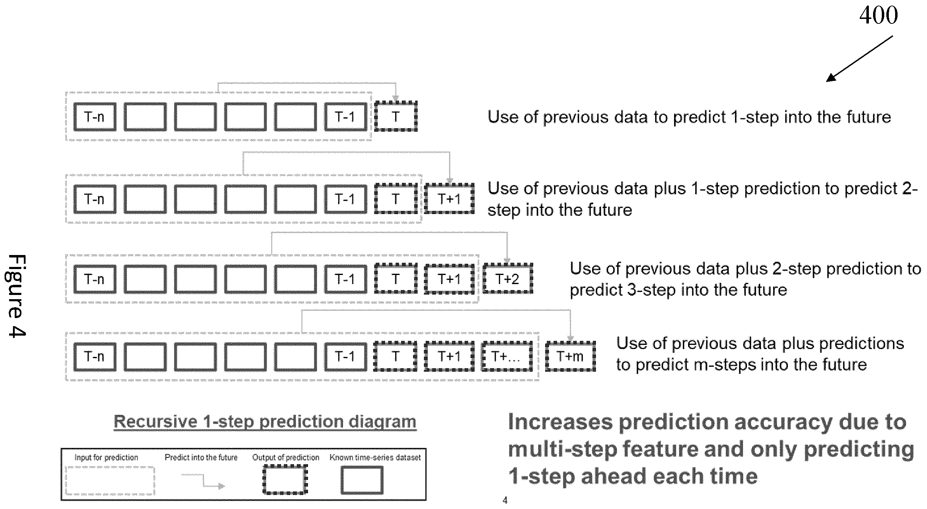

A difference (e.g., loss) between the predicted traffic flow and true traffic flow may be calculated. In this exemplary training method, the true traffic flow at the next-time point (e.g., the 1-step prediction time point) may be combined with the previous dataset and considered for the next 1-step prediction. More details on the recursive model are provided in relation to Figure 4 below. After each prediction of the test set, the difference between the true and predicted traffic flow may be determined. A loss, such as at least one of a: mean square error, mean absolute error, and Huber loss may be determined. The Mean Squared Error (MSE) is a standard loss function for regression, and tends to penalize larger errors more heavily. The Mean Absolute Error (MAE) loss function tends to be less sensitive to outliers compared to MSE. The inventor found that the Huber Loss function combines the robustness of MAE for smaller errors with the sensitivity of MSE for larger errors, providing a balance between the two.

The hyperparameters of the recursive model may then be optimized based on the loss. For instance, a grid search of the hyperparameters may be used to find the set of hyperparameters which result in the smallest (minimised) loss. The final, optimized, recursive model may be trained on all of the training set and the test set with the hyperparameters which produce the minimised loss.

The inventors found that this recursive approach may help decrease the variance of forecasting introduced when looking further ahead in the future. The multivariate nature of the model may also allow for increased complexity, thereby improving the reliability of the traffic flow predictions.

During an implementation of the method, multivariate data at a forecast time-point may be input into the, now pretrained, recursive model. The multivariate data may include the additional variables and may not include the traffic flow at the forecast time point, as this is to be predicted. The pretrained model may then predict the traffic flow at the forecast time point. The 1-step prediction of traffic flow may be combined with the previous multivariate dataset used to train the model and may be considered for the next 1-step prediction. More details on the recursive model are provided in relation to Figure 4 below.

By incorporating multiple exogenous factors, such as events, into a multivariate dataset and using a recursive 1-step forecasting model, the inventor addressed the limitations of current technologies. The inventor found that the recursive model provides a more accurate, robust, and flexible solution for traffic flow prediction, capable of adapting to new data sources and reducing forecasting variance. This approach may represent a significant advancement in the field of traffic flow forecasting, offering a more effective tool for traffic management and planning, especially since it may incorporate and introduce information about events and their impact on traffic flow in a certain location.

The methods described herein may be applied first and foremost in traffic flow forecasting. The methods may improve short term traffic flow predictions with added factors to alleviate errors based on extreme conditions of weather changes, high impact events and high impact roadworks. Furthermore, the methods may be adjusted to be applied in agricultural section where the inventor identified that time-series predictions may still be needed. Furthermore, the traffic flow forecasting may be used in retail and hospitality to indicate increased expected traffic to certain locations, thus indicating a potential increase in customers.

Instead of traffic flow, various agricultural outputs may be predicted. Examples include Crop Yield; predicting the total yield (e.g., tons of wheat) for a specific crop in a given region, livestock production; forecasting milk production per cow, water demand; Predicting irrigation water needs based on expected crop growth and weather conditions. Similarly, for exogenous variables weather data may again be used, and/or soil conditions and/or agricultural practises such as fertilizer application rates, planting dates and/or pest and diseases historical data. Of course, appropriate exogenous variables may be selected and used for the forecasting task.

The forecast traffic flow may be used to notify user(s) of the traffic flow. For instance, a target notification may be provided to a user where, upon forecasting traffic exceeding a predetermined threshold, the targeted notifications to users may be triggered. These notifications may be disseminated through various channels, which may be user defined. For example, the user may be notified via a mobile phone call, text message or through a social media notification.

The notification may communicate the expected level of traffic flow. The predicted traffic flow may be used to:
- Provide alternative routes utilizing public transport, including specific bus or train schedules and real-time availability.
- Offer discounted fares or other rewards for choosing public transport over private vehicles.
- Dynamically adjust parking fees based on forecasted traffic. Increased parking fees during peak periods can further incentivize the use of public transport. Similar for congestion charges that exist for Central London.

The forecast traffic flow may therefore be provided to improve congestion in an area. The definition of traffic flow may depend on dataset availability and may therefore have some flexibility. In this instance, the threshold or in general the concept of traffic flow can be any/all of the following:
- Traffic Volume: Absolute number of vehicles or vehicle density.
- Traffic Speed: Average speed of vehicles in a specific area.
- Travel Time: Expected travel time between two points.

**Figure 4** shows an example of 1-step recursive forecasting 400 which may be implemented in the forecasting method described herein.

The method for training the recursive model and for implementing the trained model may notionally comprise two components: the creation (e.g., processing) of a multivariate dataset and the application of a recursive 1-step forecasting model.
1. Multivariate Dataset:
   The first step in the process may involve the creation of a multivariate dataset. The multivariate dataset may include traffic flow data as well as additional variables such as weather, road conditions and events. The inventors found that the inclusion of these variables may allow the model to capture the complex and nonlinear relationships inherent in traffic flow data.

The input, denoted as y, may be represented as follows: y = (traffic_flow, variable_1, variable_2, ..., variable_n), where variable_1, variable_2, ..., variable_n represent the additional factors such as weather, road conditions and events etc. The dimension of y may not bet fixed and may be expanded according to the availability of input datasets. As previously described, the "time" variable of the data may be removed using an approach such as a sliding window. The time aspect of the data may still be inherently captured in the data by the sliding window.

In an exemplary implementation, the dimension of y may have a minimum of four variables. At least one of the variables may be traffic flow and at least another of the variables may be events. The at least 4 variables may include the traffic flow, weather, road conditions and events. The inventor found that the combination of these variables offers significant improvements to accuracy and forecasting power of the model over current technologies.

### 2. Recursive 1-Step Forecasting Model:

The second component of the method may comprise a recursive 1-step forecasting model. This model may use the multivariate dataset as input to predict traffic flow 1-step into the future. The predicted value may then be included in the dataset for the next 1-step prediction. During a training phase of recursive model, the model may be trained to predict the traffic flow of test set, based on training from training set of the multivariate dataset. An error may be determined between the prediction and a true traffic flow at the prediction time-point. The true traffic flow may then be added to train the model in a recursive manner to predict a further traffic flow.

The term '1-step' may refer to a time-point one step ahead in consistent intervals of time. For example, the training set used to train the model may comprise data at fixed intervals of time, for example every ten minutes, every hour, every day. The 1-step into the future may therefore be the next ten minutes, hour, day, etc in the time series.

During an implementation phase of the recursive model, the method may predict a traffic flow of a next-time point. In this instance, the next-time point may be a timepoint in the future, hence the true traffic flow may not be known. The predicted traffic flow may then be input into the model to predict a next traffic flow, for instance a next traffic flow in a fixed time interval.

The recursive 1-step prediction may be represented as follows: $y \left(t+1\right) = f \left(y\left(t\right), y\left(t-1\right),…, y\left(1\right)\right)$ where y(t+1) is the predicted traffic flow at time t+1, f is the forecasting function (i.e. a function used by the recursive model to predict the traffic flow), and y(t), y(t-1), ..., y(1) are the observed values up to time t. The recursive nature of the method is summarized in Figure 4.

As described above, in an exemplary example, an events variable may be included in the multivariate dataset. The events variable may be introduced based on if there is a certain event with a capacity on-going at the time of interest of the forecast traffic flow. The events variable may therefore otherwise be referred to as an event capacity variable. Based on the capacity or expected number of people attending the event, a ranking event number may be provided. The ranking event number may be between, for example 1 and 10 (or any suitable range), where 1 indicates the least number of people attending an event, for example 10 people attending a church gathering, whilst 10 indicates the highest possible number of people attending an event, for example 1,000,000 people attending the New Year's Times Square event.

During an implementation phase of the method, after each prediction, the predicted value may be added to the dataset to "retrain" the recursive model: $y \left(t+1\right) = \left(predicted_traffic_flow, variable_1, variable_2,…, variable_n\right)$

The inventor found that this recursive approach may help to decrease the variance of forecasting introduced when looking further ahead in the future (that is making long term predictions). By incorporating multiple variables into a multivariate dataset and using a recursive 1-step forecasting model, the methods described herein may provide a more accurate, robust, and flexible solution for traffic flow prediction. The inclusion of events ranking may provide a unique method to incorporate number of people attending an event in the location of forecasted traffic flow and the trained model may learn how this impacts traffic flow.

**Figure 5** shows an exemplary recursive model 500, in this example a random forest model, which may be used in the method for forecasting described herein. A random forest model is a type of machine learning algorithm which may combine the output of multiple decision trees 520a - 520d to reach a single output, denoted by 'Combined prediction' in the Figure. By combining the output of multiple decision trees, the random forest model may use an ensemble learning method.

To implement the random forest model, the inventor first performed data acquisition and preparation. A multivariate dataset may be prepared using the pre-processing and representation techniques described herein. The traffic flow data used by the inventors was acquired from a subset of the HERE Vehicle Probe Data for a region in the south of the United Kingdom(https://www.here.com/docs/bundle/probe-data-developer-guide/page/topics/probe-data.html [Accessed January 2023 to December 2023), ensuring data completeness for a specific time period. This data was enriched with weather data from the UK Met Office, and road condition and event data from the Data Thistle API (https://api.datathistle.com/ [Accessed January 2023 to December 2023]. The dataset may be 15-minute intervals which total 1 month. For instance, the inventors used 15-minute up to 1 month for testing and for further testing increased the total to 6 months.

To ensure data completeness and consistency, a subset of the HERE data was selected for a specific time period where complete data was available for all relevant variables, including weather, road conditions, and events. The inventor found that this approach may minimize the potential impact of missing data on model training and performance. Where necessary the multivariate dataset may be manipulated (i.e. pre-processed). The inventor mostly used the raw datasets gathered as they matched the required time series format of the recursive model.

In general, the dataset may be cleaned using known techniques, such as, identifying and handling any inconsistencies or errors in the data, such as duplicate entries or incorrect timestamps. Timestamps may also be matched using the datetime format for all the datasets. If there was any missing data in the dataset, the inventor used backward fill, propagating the last observed value backward to fill in missing values, however in this instance the dataset had very few missing datapoint, if any. Of course, any other data imputation techniques may be used, such as mean or median imputation.

As described above, during a data preparation step, based on the capacity or expected number of people attending an event, a ranking event number may be generated from raw event data. For instance, the ranking event number may be between 1 and 10 (or any suitable range).

Once the time-series multivariate dataset has been prepared, the random forest model may be trained. The random forest may be trained for a 1-step recursive application to forecast a traffic flow.

The random forest model may use bagging (also referred to as bootstrap aggregation) during training. The multivariate dataset may be split into a training dataset 510 and a testing dataset. The split may be 80% training and 20% testing. To train each tree within the random forest, bagging may be performed on the training dataset. Bagging may refer to sampling, with replacement, of the training dataset. Each tree in the random forest may be trained on a random subset of the training set. A subset may be generated by taking/drawing a random sample from the training set and adding it to the subset. The sample may then be returned to the training set. Another sample may then be randomly drawn and added to the subset. This process may be repeated until the subset has been filled. The subset may have the same number of samples as the original training dataset or may have fewer samples. Due to the time dependency, during sampling the data points forming the subsets may not be split independently. Instead, the datapoints may be selected as part of a larger time period to form the subset, for instance, such a day, week, instead of an individual split such as random 15-minute intervals. That is, if the datapoints were measured in 15 minute intervals, the subsets may be formed by taking consecutive 15 minute intervals (e.g., groups which would form days, weeks, etc).

The inventor selected 200 trees to train within the random forest. Each tree may be trained using a bootstrapped subset described above. The inventor found that 200 trees provided a good balance between performance and computational cost for the multivariate dataset. The number of trees may be selected based on an optimisation of hyperparameters, see below.

Each tree in the exemplary random forest was configured as follows:
Maximum Depth: The inventor limited the maximum depth of an individual tree to 10 or 11. The inventor found that this may prevent overfitting.

Minimum Samples Split: This parameter controls the minimum number of samples required to split an internal node of a tree. The inventor set this to 2. This may help avoid overly fine-grained splits.

Minimum Samples Leaf: This parameter controls the minimum number of samples required to be at a leaf node. This was set to 1.

Number of variables randomly sampled as candidates at each split: The sample split may be set according to the number of variables within the multivariate dataset. For instance, if there are p variables within a subset of the multivariate dataset for a tree, the sample split may be set to consider p/3 variables at each split.

Random State: For reproducibility, the inventor set a fixed random state (in this instance 111). In Random Forest Regression, random_state may be used to control the randomness of the bootstrapping of the samples when used to build the subsets for each tree. Further, the random state may control the sampling of the variables to consider when looking for the best split at each node (as above).

The above hyperparameters provide an exemplary setting for the random forest model. Of course, other suitable values may be used with the random forest model.

Once the initial hyperparameters are set, each of the trees in the random forest may be trained. The trees may be trained concurrently and independently of each other. As described above, for each tree, a subset of the training set may be selected using a bagging technique. To train each tree, at each node of a tree a best variable and split point among the randomly selected variables within the subset may be selected.

The best variable and split point may be selected using known techniques. For instance, the best variable and split point may be selected by determining a sum of squared error (SSE) for each variable and selecting the variable with the lowest SSE. The subset may be split at each node into two subsets based on the selected split. This process may be repeated recursively until a stopping criterion is met, for instance reaching a minimum node sample size. At each leaf node (terminating node) an average value of the traffic flow variable may be determined from each sample of the subset which has terminated at that node. This process may be repeated for each tree, thereby 'growing' a random forest.

Once the trees have been trained using the training dataset, the testing dataset may be used to validate the accuracy of the random forest model. The random forest may be configured to predict a traffic flow at a first time-point in the time-series traffic flow data within the test set. The first time-point may be referred to as a next time-point in the sense that the random forest has been trained on all traffic flow data (i.e. within the training set), up to but not including the first time-point traffic flow data. The random forest may take as an input all time-series variables at the next time-point (i.e., the additional time-series variables), except from the (true) traffic flow variable at that time-point. The random forest may then predict a traffic flow at the next-time point.

As shown in the Figure, each tree in the random forest may make a prediction for the traffic flow at the next-time point (prediction 1, prediction 2, prediction 3, prediction 4). The prediction by the random forest may be made by combining each individual prediction. For instance, the predicted traffic flow by each tree in the random forest may be averaged to determine the combined prediction.

The hyperparameters of the random forest may be adjusted to train the random forest based on the difference between the predicted traffic flow and the true traffic flow at the next time point. For instance, a loss may be determined between the predicted traffic flow and the true traffic flow. An example of the loss is a squared error.

The true traffic flow and additional multivariate data at the next time point may then be input into the random forest model to 're-train' the model. The multivariate data may traverse each tree in the model until it terminates at a leaf node. The traffic flow of the multivariate data may then be appended to the mean traffic flow at that leaf node and a new mean traffic flow may be determined for that leaf node in each tree. The traffic flow at a second time-point, a next-time point in the testing set, may then be predicted in similar manner to the first time-point.

The above process may be repeated for each time-point in the testing set. A loss may be calculated between each prediction of the traffic flow and the true traffic flow. The loss may be determined using, for example, a mean square error, mean absolute error and/or Huber loss. The random forest may be retrained based on the loss. For instance, the random forest may be retrained to optimize/minimize the loss. Re-training the model may comprise adjusting the hyperparameters of the model.

The inventor retrained the random forest using a grid search of the hyperparameters. During a grid search, multiple combinations of hyperparameters may be selected and a loss determined for each set of hyperparameters. The hyperparameters which generate the smallest loss (optimized loss) may be selected as the optimum parameters for the random forest. The inventor performed the grid search on various numbers of trees, depths, splits and leaves. The inventor also checked in a similar fashion for Gradient Boosting Machines (GBMs).

Once the random forest is trained, and may then be referred to as a pretrained random forest, it may be implemented to predict traffic flow at a forecast time-point. The forecast time-point may be a time-point in which traffic flow data is not available. For instance, the forecast time-point may be at a future time.

Multivariate data at the forecast time-point may be input into the pretrained random forest. The multivariate data at the forecast time-point may be predicted data at that time point. For instance, the multivariate data may include at least one of a weather variable, road condition variable and events variable. In an exemplary example, the multivariate dataset may include a weather variable, road surface variable and the events variable.

The pretrained random forest may then predict a traffic flow at the forecast time point.

The inventor combined datasets from multiple sources to construct the time-series multivariate dataset. The primary dataset for traffic flow was the HERE Vehicle Probe Data for a region in the south of the United Kingdom, a commercially licensed dataset providing detailed historical traffic information. This dataset offers a source of vehicle information, including vehicle speeds, locations, and timestamps, allowing for the reconstruction of historical traffic patterns and the training of forecasting model.

Weather Data: Historical weather data, including temperature and precipitation was integrated from publicly available sources such as the UK Met Office. The inventor found that weather conditions may significantly impact traffic flow, and incorporating this data allows the model to account for these effects.

Road Condition Data: Information on road closures, accidents, and roadworks was incorporated from sources such as local government agencies and traffic management platforms. Event Data: Data on planned events, including concerts, sporting events, and festivals, may be provided by the Data Thistle Events API for a region in the South of the UK. This dataset also includes an impact factor of the event which may be used during the implementation of the model, which was based on the capacity of event locations.

The training and implementation phases for the random forest may be summarised as follows:
1. Initialization: The model is initially trained on a historical time-series multivariate dataset.
2. Prediction Step: For each time step t, the model predicts the traffic flow for the next time step t+1, using the available data up to time t and the multivariate data at the t+1 time step other than the traffic flow.
3. Data Update: The predicted traffic flow for t+1 is then appended to the input data, effectively becoming a lagged variable for the next prediction step.
4. Recursion: Steps 2 and 3 are repeated for subsequent time steps, creating a recursive loop where the model's predictions become part of the input for future predictions.

The inventor found that the recursive nature of the 1-step forecasting model may allow for a unique approach to error minimization. At each time step, the model predicts the traffic flow for the next step. This prediction may then be incorporated into the input data for the subsequent prediction, creating a recursive loop. This approach allows the model to learn from its own predictions and adjust its subsequent forecasts accordingly.

The exemplary traffic flow prediction model may consider temporal correlation, time periodicity, and weather disturbance, road conditions and events, thereby providing higher accuracy and robustness compared to known models. The model may also be adjustable to include other factors where available. This may help in business opportunities with transport mode operators and local councils. It may also allow for better estimation of CO2 emissions.

The benefits of traffic flow forecasting methods described herein are manifold. Firstly, the methods may enable traffic management authorities to anticipate congestion and implement measures to mitigate it, such as adjusting traffic signal timings or rerouting traffic. This may significantly reduce travel times and improve the overall efficiency of the transportation system. Secondly, by predicting traffic volumes, authorities may identify potential accident hotspots and take preventive measures, thereby enhancing road safety. Thirdly, traffic flow forecasts may inform urban planning decisions, such as where to build new roads or public transport facilities, based on projected demand. Lastly, reducing CO2 emissions, by 2030, by for example reducing congestion is a priority for many councils.

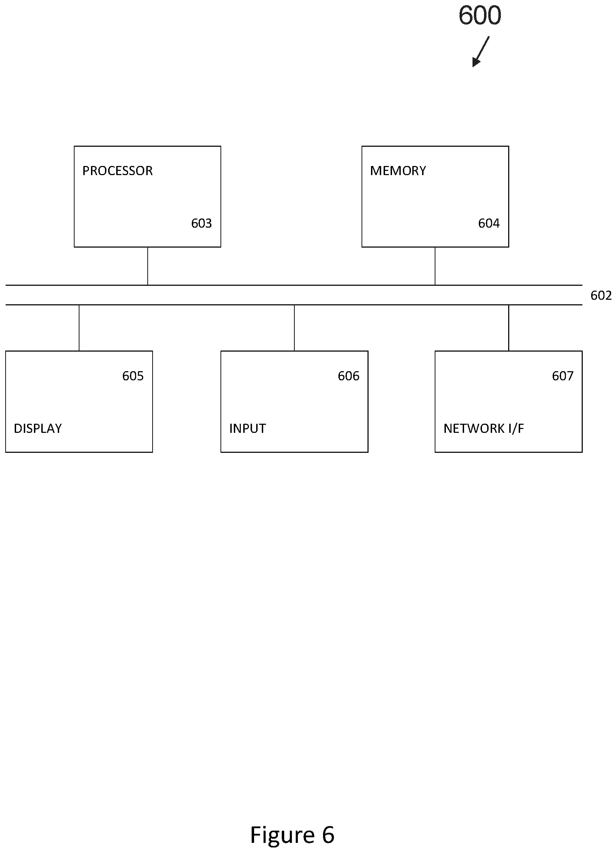

**Figure 6** is a block diagram of an information processing apparatus 600 or a computing device 600, such as a data storage server, which embodies the present invention, and which may be used to implement some or all of the operations of a method embodying the present invention, and perform some or all of the tasks of apparatus of an embodiment. The computing device 600 may be used to implement any of the method steps described above, e.g. any of steps S10-S20 or S100 - S120 for example.

The computing device 600 comprises a processor 603 and memory 604. Optionally, the computing device also includes a network interface 607 for communication with other such computing devices, for example with other computing devices of invention embodiments. Optionally, the computing device also includes one or more input mechanisms such as keyboard and mouse 606, and a display unit such as one or more monitors 605. These elements may facilitate user interaction. The components are connectable to one another via a bus 602.

The memory 604 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S10-S20 and/or s100-s120. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 603 is configured to control the computing device and execute processing operations, for example executing computer program code stored in the memory 604 to implement any of the method steps described herein. The memory 604 stores data being read and written by the processor 603 and may store at least one pretrained recursive model, such as a pretrained random forest model and/or the multivariate dataset and/or other data, described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 603 may be considered to comprise any of the units described above. Any operations described as being implemented by a unit may be implemented as a method by a computer and e.g. by the processor 603.

For training the model described herein, the inventors used AWS instances. In particular, the inventors used the g4dn.xlarge instance. The model may be trained using, for example 2nd Generation Intel Xeon Scalable Processors (Cascade Lake P-8259CL) and a NVIDIA T4 Tensor Core GPU. The GPU may be used to reduce the training time. However, the in an example, only the CPU may be used for training. The GPU/ a CUDA may be used for example, in an example where the models are transitioned to tensors.

The display unit 605 may display a representation of data stored and/or generated by the computing device, such as a predicted traffic flow and/or GUI windows and/or interactive representations enabling a user to interact with the apparatus 1300 by e.g. selection interaction, input text boxes, and/or any other output described above, and may also display a cursor and dialog boxes and screens enabling interaction between a user and the programs and data stored on the computing device. For example, the display unit may allow the user to input multivariate data at the forecast time point. The input mechanisms 606 may enable a user to input data and instructions to the computing device, such as enabling a user to input any user input described above. For example, the display unit may display a GUI including a User panel for the user to interact with as described herein. The user may select a time-point (for example a date) for a forecast along with a forecast hour. The user may interact with the GUI and display to generate and view a forecast for a network. The GUI may display each 1-step recursive forecast up to and including the forecast at the selected time-point.

The network interface (network I/F) 607 may be connected to a network, such as the Internet, and is connectable to other such computing devices via the network. The network I/F 607 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 600 such as that illustrated in Figure 6. Such a computing device need not have every component illustrated in Figure 6 and may be composed of a subset of those components. For example, the apparatus 600 may comprise the processor 603 and the memory 604 connected to the processor 603. Or the apparatus 600 may comprise the processor 603, the memory 604 connected to the processor 603, and the display 605. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data. For example, the neural network model(s) or forecasting model may be stored on a separate server from other units.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

The inventor used the python programming language to implement the system described herein. In particular, the inventor used the scikit library in python. The exemplary random forest model may be implemented in python using the command: model = RandomForestRegressor(n_estimators=200, max_depth=11, min_samples_split=2, min_samples_leaf=1, random_state=111).

The model may be trained on the training dataset up to time t, as follows: model.fit(X_t, y_t) where x represent variables within the multivariate dataset, other than traffic flow, and y represents the traffic flow. The traffic flow for the time step (time-point) t+1, may be predicted using scikit as follows: model.predict(X_next)[0] where X_next, includes my datasets for the next time point. The predicted traffic flow may then be combined with the traffic flow for time step t+1 (i.e., the variable marked as y), for the recursive step of the model.

During training, the error (loss) between the prediction traffic flow and the actual (true) traffic flow value for t+1 may be predicted. The mean squared error may be used to determine the error, available in scikit package: mse = mean_squared_error(actual, predicted). The grid search of hyperparameters may be implemented in scikit. The optimization of the hyperparameters may additionally be checked in a similar fashion for Gradient Boosting Machines (GBMs). This can be done by:
model = GradientBoostingRegressor (n_estimators, learning_rate, max_depth, subsample) again from scikit-learn.

Additional libraries in python may also be used such as: pandas, numpy, statsmodels, pytorch and other standard packages such as os, and datetime.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both.

The essential elements of a computer are a processor for executing instructions coupled to one or more memory devices for storing instructions and data.

According to aspect of the present invention there is provided a computer program which, when run on a computer, causes the computer to carry out any of the methods described herein.

According to yet another aspect of the present invention there is provided an information processing apparatus for performing any of the methods described herein.

Embodiments of another aspect include a computer program which, when executed by a companion device, causes the companion device to execute a method of an embodiment. The computer program may be stored on a computer-readable medium. The computer-readable medium may be non-transitory.

The invention may be implemented in digital electronic circuitry, or in computer hardware, firmware, software, or in combinations thereof. The invention may be implemented as a computer program or a computer program product, i.e. a computer program tangibly embodied in a non-transitory information carrier, e.g. in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular embodiments. Other embodiments are within the scope of the following claims. For example, the steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein. The above-described embodiments of the present invention may advantageously be used independently of any other of the embodiments or in any feasible combination with one or more others of the embodiments.

## Claims

1. A computer implemented method for forecasting traffic flow using a pretrained recursive model, comprising:
inputting multivariate data at a forecast time-point into the pretrained recursive model; and
predicting, using the pretrained recursive model, a traffic flow at the forecast time-point;
wherein the pretrained recursive model is trained using a multivariate dataset comprising a time-series traffic flow variable and an additional time-series variable at times before the forecast time-point, and wherein the multivariate data at the forecast time-point input into the pretrained recursive model comprises the additional time-series variable at the forecast time-point.

2. The method according to claim 1, wherein the method further comprises:
further training the pretrained recursive model using the predicted traffic flow at the forecast time-point and the multivariate data at the forecast time-point; and
predicting a next traffic flow at a next forecast time-point using the further trained recursive model.

3. The method according to any preceding claim, wherein the recursive model is a 1-step recursive forecasting model and wherein the times before the forecast time-point are measured over consistently spaced intervals of time.

4. The method according to claim 3, wherein the forecast time-point is a next interval of time in the consistently spaced intervals of time.

5. The method according to any preceding claim, wherein the additional time-series variable comprises at least one of: a weather variable, a road condition variable and an event variable, preferably wherein the additional time-series variable comprises the event variable and at least one of the weather variable and road condition variable.

6. The method according to claim 5, wherein the additional time-series variable comprises the event variable, and/or the event variable includes a ranking event number based on the capacity and/or expected number of people attending the event, preferably wherein the ranking event number is between 1 and 10.

7. The method according to any preceding claim wherein the traffic flow is traffic flow for vehicles and/or people.

8. The method according to any preceding claim, wherein the pretrained recursive model is a random forest model.

9. The method according to any preceding claim wherein the method further comprises notifying a user of the predicted traffic flow and/or wherein, based on the predicted traffic flow the method further comprises at least one of: dynamically adjusting traffic light timings, generating alerts about future traffic congestion based on the predicted traffic flow exceeding a predefined threshold, and providing users with alternative routes or suggesting delaying their journeys.

10. A computer implemented method for training a recursive model to forecast traffic flow comprising:
inputting a multivariate training dataset, comprising a time-series traffic flow variable and an additional time-series variable, into the recursive model;
predicting, using the recursive model, a traffic flow at a next time-point of the time-series traffic flow variable, wherein the recursive model comprises preset hyperparameters; and
adjusting the preset hyperparameters to train the recursive model based on the difference between the predicted traffic flow and a true traffic flow at the next time-point.

11. The method according to claim 10, wherein the difference between the predicted traffic flow and true traffic flow at the next time-point is based on a loss between the predicted traffic flow and the true traffic flow at the next time-point.

12. The method according to claim 11, wherein the loss is at least one of a mean square error, mean absolute error, and Huber loss.

13. The method according to any of claims 10 to 12, wherein the hyperparameters are adjusted based on a grid search of the hyperparameters.

14. The method according to any of claims 10 to 13, wherein a multivariate dataset comprises the multivariate training dataset and a multivariate testing dataset, the recursive model is trained using the multivariate training dataset and the multivariate testing dataset comprises the true traffic flow at the next time-point.

15. The method according to any preceding claim, wherein the recursive model is a random forest model and preferably wherein trees in the random forest model are trained using subsets of the multivariate training dataset which are selected using bootstrap aggregation.
